(19)

Europäisches
Patentamt
European
Patent Office
Office européen
des brevets

(11) **EP 2 642 487 A1**

(12) **EUROPEAN PATENT APPLICATION**

(43) Date of publication:
**25.09.2013 Bulletin 2013/39**

(51) Int Cl.:
***G11B 27/10*** (2006.01)   ***G11B 27/28*** (2006.01)
***H04N 5/14*** (2006.01)

(21) Application number: **12305337.3**

(22) Date of filing: **23.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Guermoud, Hassane**
**35510 Cesson Sevigne (FR)**

• **Chevallier, Louis**
**35520 La Mézière (FR)**
• **Oisel, Lionel**
**35137 La Nouaye (FR)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Personalized multigranularity video segmenting**

(57)   The invention pertains to method for segmenting an audiovisual content (20) in a semantic manner and in quick way. To achieve that, pre-segmentation data (21) are generated offline and retrieved (11) by an end user. At the level of the end user, a step of clustering (12) seg- ments is performed. The invention allows also to ap- proach a desired semantic granularity by modifying a clustering threshold. The invention also allows to quickly generate a semantic segmenting for a segment, which allows to the user to quickly browse the audiovisual con- tent (20).

**FIG 1**

**Description**

TECHNICAL FIELD

The invention relates to the field of automatic video segmenting.

BACKGROUND

In order for a user to quickly browse a video content, some solutions already exist. They typically consist in segmenting a video in sub-segments. A first known segmenting solution consists in detecting shots in the video content, determining similarities between the detected shots and merging some detected shots so as to get a reasonable number of segments for the video content. The steps of detecting and determining similarities take usually some hours, it is therefore typically done only once and leads to a semantic but fixed segmenting. Therefore, a second known segmenting solution is proposed in US2010/0162313, consisting in segmenting a video content according to time intervals entered by the user. While this is an interesting solution to quickly get a segmented video, the segmenting is somehow arbitrary because it relies only on the time intervals, but does not take account of the semantic of the video, as it is done with the first known segmenting solution. This second known segmenting solution has, however, the advantage of allowing the user to choose the granularity of the segments of the content video to segment without waiting too long, contrary to the first described solution, which leads to a fixed segmenting.

While the two described solutions are both valuable, their respective advantages appear to be contradictory in that they cannot be combined in a single solution. It is therefore an object of the invention to overcome the limits of the present state of the art by providing such solution, allowing the user to quickly segment a video in a semantic manner.

SUMMARY OF THE INVENTION

It is proposed a method for segmenting an audiovisual content comprising retrieving data representative of similarity values between a plurality of shots of the audiovisual content, and clustering contiguous shots having a similarity value smaller than an initial threshold similarity value into clustered segments.

As the step of generating data representative of similarity values between a plurality of shots of the audiovisual content is time consuming, it is advantageously performed offline. This way, those data are retrieved for use, and the clustering, which necessitates much less time and computing power, is done at the level of the end user.

The data may be retrieved from a server or from a physical medium.

Advantageously, the method also comprises the step of selecting one clustered segment, detecting shots in the clustered segment, determining similarity values between the detected shots, and clustering contiguous detected shots having a similarity value smaller than a second threshold similarity value, the second threshold similarity value being smaller than the initial threshold similarity value.

As a result, the user may browse sub-segments of a segment, the sub-segments having a meaningful semantic content.

The method may also comprise a step of modifying the initial threshold similarity value before the clustering step.

This way, the user has the possibility to personalize the segmentation of the audiovisual content in that he approaches intuitively the segment granularity he wishes.

Advantageously, the method comprises a step of modifying the second threshold similarity value.

This way, the granularity of sub-segments of a segment may be approached according to the segment granularity chosen by the user.

The invention also relates to an apparatus for segmenting an audiovisual content comprising a module adapted to retrieve data representative of similarity values between a plurality of shots of the audiovisual content, and a processor for clustering contiguous shots having a similarity value smaller than an initial threshold similarity value into clustered segments.

BRIEF DESCRIPTION OF THE DRAWINGS

Figure 1 shows a flowchart of the method according to the invention

Figure 2 shows a receiver implementing the invention

Figure 3 gives an overview of the different types of segmentation that the invention allows to achieve

Figure 4 shows how playing on a threshold similarity value allows the user to change the segmentation of the audiovisual content

Figure 5 is an alternative illustration on how the receiver generates chaptering of different levels

DETAILED DESCRIPTION OF PREFERRED EMBODIMENTS

For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

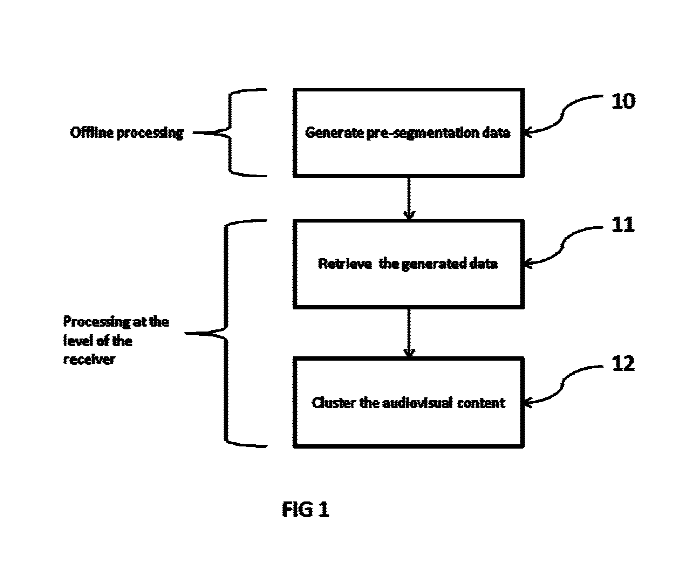

Fig.1 illustrates an implementation of a method according to the invention. A step of generating 10 pre-segmentation data is processed offline. Then, at the level of the receiver 24, the generated data are retrieved 11, and the audiovisual content is clustered 12.

The pre-segmentation data 21 may be stored on a server and retrieved 11 upon request by a receiver 24 via a network. The pre-segmentation data 21 may also be written to a physical medium, such as a Blu-ray disc for example.

Pre- segmentation data 21 representative of similarity values between a plurality of shots of an audiovisual content 20 are first generated 10 as follows: a shot detection is first performed on the audiovisual content 20 by determining the luminance histogram differences between two successive images. When this difference is above a predefined threshold, then a transition between two shots has been detected. Once the shots have been all detected, a module extracts determined features as well as a key frame for each detected shot. This key frame possesses features which are characteristic of the detected shot. There are many ways to extract a key frame: one way is to extract the middle frame of the shot. A matrix similarity MS (i, j) related to the detected shots is then determined. The elements of this similarity matrix are coefficients representing a distance between shots. The distance between two shots is a value representative of the distance between features relative to each of the shot. These features are for example color features and edge features associated to the extracted key frame. Let us suppose fifteen shots have been detected: then MS (3, 13) represents the distance between the detected shot 3 and the detected shot 13. An example of distance is:

$$M(3,13) = Distance(3,13) =$$

$$(1/(wc+we))*(wc*color\_dist + we*edge\_dist)$$

Where wc and we are weighting coefficients respectively related to colour and edge features, and color_dist and edge_dist respectively represent color distance and edge distance between shot 3 and shot 13.

Similarity between two shots is defined as the inverse of the distance between two shots.

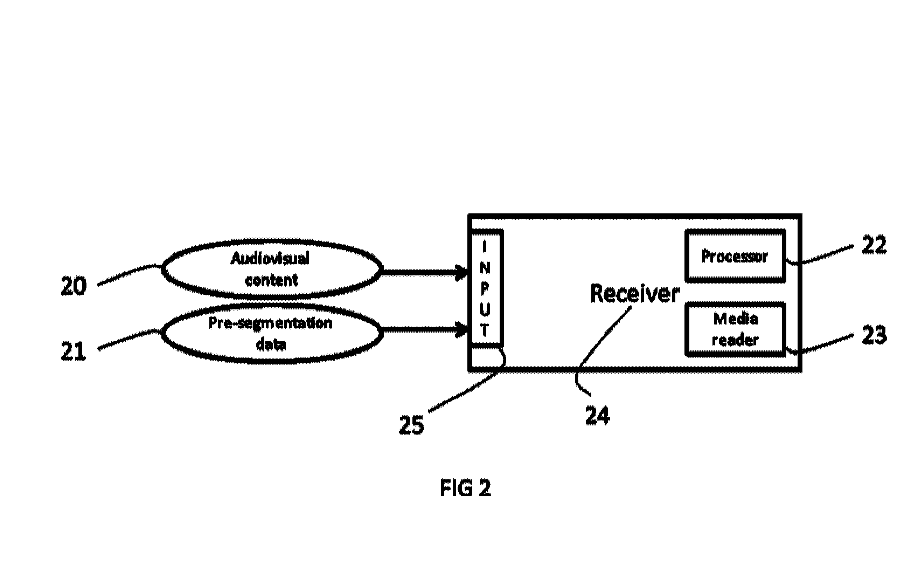

Fig.2 illustrates a receiver 24 adapted to implement a method according to the invention. This receiver has a module 25 adapted to retrieve pre-segmentation data 21, as well as a module adapted to retrieve an audiovisual content 20 in the case the audiovisual content 20 is stored outside of the receiver 24. The receiver comprises a processor adapted to cluster segments of the audiovisual content 20. The receiver 24 comprises also a media reader 23 adapted to read the audiovisual content 20. The receiver 24 may be also adapted to retrieve 11 the pre-segmentation data 21 from a physical medium.

Optionally, a chaptering is also generated outside of the receiver 24 and is comprised in the pre- segmentation data 21. A chaptering designates a set of temporal indexes associated to frames of the audiovisual content 20. A classic way to generate a chaptering is to first cluster 12 the contiguous detected shots which have a similarity value smaller than pre- defined similarity, and then to generate an identifier for each cluster. Each cluster is characterized by at least two temporal indexes, one representing the beginning of the cluster and the other representing the end of the cluster.

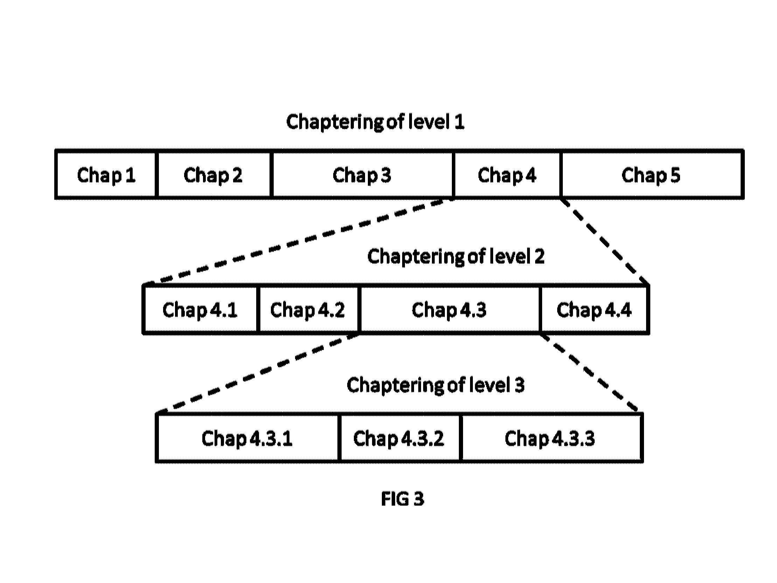

Fig.3 illustrates the definition given to a chapter of level i, where i is an integer. The audiovisual content 20 is divided in five chapters, chap 1 to chap 5. This is called a chaptering of level 1. One of those chapters may be then still divided in sub-chapters: as exemplified in Fig.3, chap 4 is selected and is divided itself in four chapters, namely chap 4.1, chap 4.2, chap 4.3 and chap 4.4. These four chapters are chapters of level 2. Then it is still possible to divide one of those four chapters. Chap 4.3 is divided in three chapters, namely chap 4.3.1, chap 4.3.2 and chap 4.3.3, that is chapters of level 3. The granularity of the different chaptering levels is different in that a chaptering of level i is divided in chapters whose length is smaller than chapters of a chaptering of level i+1.

At the level of the receiver 24, an audiovisual content 20 is retrieved 11, as well as the data representative of similarity values between a plurality of shots of the audiovisual content 20. A step of detection of contiguous shots is performed at the level of the receiver 24. The detected contiguous shots with a similarity above an initial threshold similarity value TS1 are clustered 12. This allows to generate a chaptering of level 1 at the level of the receiver 24. Identifiers, key frames for example, are then generated to identify the generated clusters, and are displayed on a display to the user. Optionally, this chaptering of level 1 may be also generated outside the receiver 24 and retrieved 11 by the receiver 24.

As the step of generating the semantic pre-segmentation is time consuming and takes typically some hours, but needs to be done only once, it is advantageous to perform it offline before that the receiver 24, for example a set top box with limited computing power, retrieves 11 the pre-segmentation data 21.

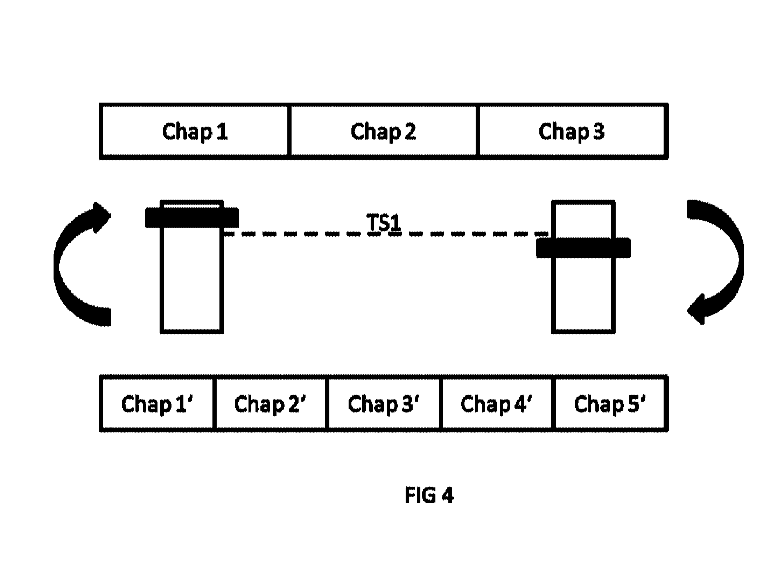

As illustrated in Fig.4, the initial threshold similarity value TS1 may be modified by the user. By increasing TS1, the user gets less chapters, and by decreasing TS1, the user gets more chapters. This way, the user can modify the granularity of the chapters of the audiovisual content 20 and browse the audiovisual content 20 in a quick and personalized way.

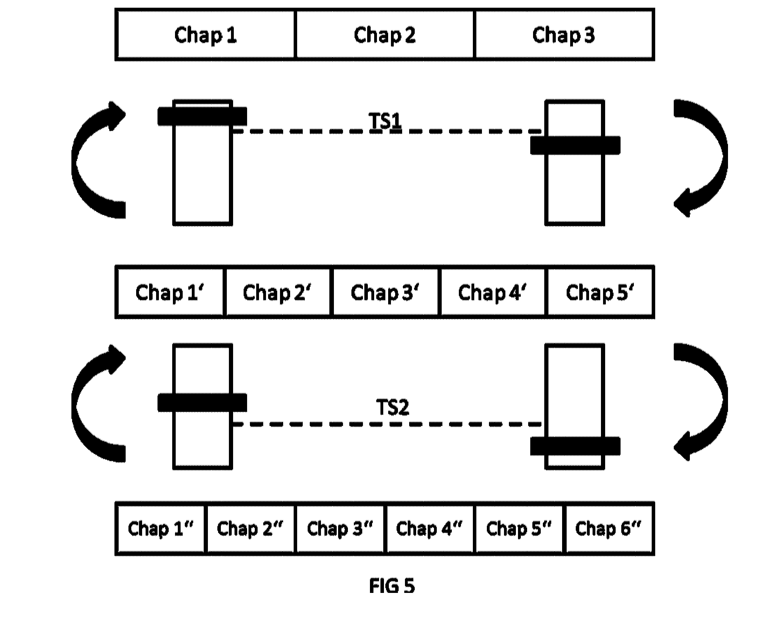

Optionally, an obtained chapter may be itself chaptered. This is illustrated by Fig. 5. A clustered segment of a chaptering of level 1 is selected, then steps of detecting and clustering 12 contiguous shots presenting a threshold similarity value TS2 smaller than TS1 are performed. A chaptering of level 3 is then obtained. This threshold similarity value TS2 may advantageously be adjusted by the user. As a result, a same segment may be divided into sub- segments of different granularity. It appears for example on the Fig. 5 that the granularity of chap 5" is smaller than the granularity of the chapter 3', which is itself smaller than the granularity of chapter 1. This way, the user quickly browses the audiovisual content 20 in a personalized manner.

This process can of course be generalized: thus, a chaptering of level (i+1) may be obtained from a chaptering of level i, by performing a clustering 12 of contiguous shots presenting a threshold similarity TS(i+1) smaller than a threshold similarity TS(i). The level of chaptering may then be easily ascended or descended, and allows an intuitive and quick browsing.

**Claims**

1.    Method for segmenting an audiovisual content (20) comprising:

- retrieving (11) data (21) representative of similarity values between a plurality of shots of the audiovisual content (20); and
- clustering (12) contiguous shots having a similarity value smaller than an initial threshold (TS1) similarity value into clustered segments.

2.    Method according to claim 1, wherein the data (21) are retrieved (11) from a server

3.    Method according to claim 1, wherein the data (21) are retrieved (11) from a physical medium

4.    Method according to any one of claims 1 to 3, comprising:

- selecting one clustered segment;
- detecting shots in the clustered segment;
- determining similarity values between the detected shots; and
- clustering (12) contiguous detected shots having a similarity value smaller than a second threshold (TS2) similarity value, the second threshold (TS2) similarity value being smaller than the initial threshold (TS1) similarity value

5.    Method according to any of claims 1 to 4, comprising modifying the initial threshold (TS1) similarity value before the clustering step (12)

6.    Method according to claim 4, comprising modifying the second threshold (TS2) similarity value

7.    Apparatus (24) for segmenting an audiovisual content (20)comprising:

- A module (25) adapted to retrieve (11) data (21) representative of similarity values between a plurality of shots of the audiovisual content (20); and
- A processor (22) for clustering (12) contiguous shots having a similarity value smaller than an initial threshold similarity value (TS1) into clustered segments.

Offline processing

Generate pre-segmentation data — 10

Retrieve the generated data — 11

Processing at the level of the receiver

Cluster the audiovisual content — 12

FIG 1

FIG 2

## Chaptering of level 1

| Chap 1 | Chap 2 | Chap 3 | Chap 4 | Chap 5 |
|--------|--------|--------|--------|--------|

## Chaptering of level 2

| Chap 4.1 | Chap 4.2 | Chap 4.3 | Chap 4.4 |
|----------|----------|----------|----------|

## Chaptering of level 3

| Chap 4.3.1 | Chap 4.3.2 | Chap 4.3.3 |
|------------|------------|------------|

**FIG 3**

EP 2 642 487 A1

FIG 4

EP 2 642 487 A1

| Chap 1 | Chap 2 | Chap 3 |
|--------|--------|--------|

TS1

| Chap 1' | Chap 2' | Chap 3' | Chap 4' | Chap 5' |
|---------|---------|---------|---------|---------|

TS2

| Chap 1" | Chap 2" | Chap 3" | Chap 4" | Chap 5" | Chap 6" |
|---------|---------|---------|---------|---------|---------|

**FIG 5**

**EUROPEAN SEARCH REPORT**

Application Number

EP 12 30 5337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YEUNG M ET AL: "Segmentation of Video by Clustering and Graph Analysis", COMPUTER VISION AND IMAGE UNDERSTANDING, ACADEMIC PRESS, US, vol. 71, no. 1, 1 July 1998 (1998-07-01), pages 94-109, XP004448871, ISSN: 1077-3142, DOI: 10.1006/CVIU.1997.0628 * pg. 97, para. 3.1 - pg.98, para. 3.3 *<br>----- | 1-7 | INV.<br>G11B27/10<br>G11B27/28<br>H04N5/14 |
| X | US 2003/020966 A1 (YASHIRO SATOSHI [JP]) 30 January 2003 (2003-01-30) * figures 5,11 * * paragraphs [0074], [0096] *<br>----- | 1-7 | |
| X | WO 2010/055242 A1 (FRANCE TELECOM [FR]; LECHAT PATRICK [FR]; BERRANI SID AHMED [FR]; BESS) 20 May 2010 (2010-05-20) * figure 5 * * page 11, line 16 - line 21 * * page 16, line 11 - line 24 *<br>----- | 1-7 | |
| | | | TECHNICAL FIELDS SEARCHED (IPC) |
| X | US 6 628 710 B1 (LLACH-PINSACH JOAN [ES] ET AL) 30 September 2003 (2003-09-30) * figure 5 * * column 2, line 35 - line 55 * * column 4, line 8 - line 50 *<br>----- | 1-7 | G11B<br>H04N |
| X | US 2008/232687 A1 (PETERSOHN CHRISTIAN [DE]) 25 September 2008 (2008-09-25) * figures 1,2,7,8 *<br>----- | 1-7 | |
| X | US 2008/316307 A1 (PETERSOHN CHRISTIAN [DE]) 25 December 2008 (2008-12-25) * paragraphs [0005] - [0011] *<br>----- | 1-7 | |
| | -/-- | | |

The present search report has been drawn up for all claims

| Place of search | Date of completion of the search | Examiner |
|---|---|---|
| The Hague | 27 July 2012 | Doyle, Walter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

EP 12 30 5337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/125877 A1 (CHANG SHIN-FU [US] ET AL) 1 July 2004 (2004-07-01)<br>* figure 8 *<br>* paragraphs [0076] - [0079] *<br>* paragraphs [0098] - [0103] *<br>----- | 1-7 | |

TECHNICAL FIELDS
SEARCHED       (IPC)

The present search report has been drawn up for all claims

| Place of search | Date of completion of the search | Examiner |
|---|---|---|
| The Hague | 27 July 2012 | Doyle, Walter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 2 642 487 A1

**ANNEX TO THE EUROPEAN SEARCH REPORT
ON EUROPEAN PATENT APPLICATION NO.**

EP 12 30 5337

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2012

| Patent document cited in search report | | Publication date | Patent family member(s) | | Publication date |
|---|---|---|---|---|---|
| US 2003020966 | A1 | 30-01-2003 | US | 2003020966 A1 | 30-01-2003 |
| | | | US | 2007172206 A1 | 26-07-2007 |
| WO 2010055242 | A1 | 20-05-2010 | EP | 2353163 A1 | 10-08-2011 |
| | | | WO | 2010055242 A1 | 20-05-2010 |
| US 6628710 | B1 | 30-09-2003 | CN | 1352856 A | 05-06-2002 |
| | | | EP | 1129573 A2 | 05-09-2001 |
| | | | JP | 2003503972 A | 28-01-2003 |
| | | | US | 6628710 B1 | 30-09-2003 |
| | | | WO | 0103430 A2 | 11-01-2001 |
| US 2008232687 | A1 | 25-09-2008 | AT | 475969 T | 15-08-2010 |
| | | | DE | 102007013811 A1 | 25-09-2008 |
| | | | DE | 102007063635 A1 | 02-04-2009 |
| | | | EP | 2089886 A2 | 19-08-2009 |
| | | | US | 2008232687 A1 | 25-09-2008 |
| | | | WO | 2008113596 A2 | 25-09-2008 |
| US 2008316307 | A1 | 25-12-2008 | AT | 484801 T | 15-10-2010 |
| | | | DE | 102007028175 A1 | 02-01-2009 |
| | | | EP | 2132667 A2 | 16-12-2009 |
| | | | US | 2008316307 A1 | 25-12-2008 |
| | | | WO | 2008155094 A2 | 24-12-2008 |
| US 2004125877 | A1 | 01-07-2004 | AU | 7596201 A | 30-01-2002 |
| | | | US | 2004125877 A1 | 01-07-2004 |
| | | | WO | 0207164 A2 | 24-01-2002 |

EPO FORM P0459

For more details about this annex : see Official Journal of the European Patent Office, No. 12/82

12

**EP 2 642 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100162313 A